# EUROPÄISCHE PATENTSCHRIFT

(11) **EP 2 377 829 B1**
(45) Veröffentlichungstag und Bekanntmachung des Hinweises auf die Patenterteilung: **11.12.2024**
(21) Anmeldenummer: 11162669.3
(22) Anmeldetag: 15.04.2011
(51) Int. Cl.: C03C 4/06, C03C 8/14, C09K 9/00, C04B 41/50

(54) **REVERSIBLE LICHTEMPFINDLICHE BESCHICHTUNG UND VERFAHREN ZU DEREN HERSTELLUNG**
REVERSIBLE PHOTOSENSITIVE COATING AND METHOD FOR PRODUCING SAME
REVÊTEMENT PHOTOSENSIBLE RÉVERSIBLE ET SON PROCÉDÉ DE FABRICATION

(30) Priorität: 16.04.2010 CH 5492010
(43) Veröffentlichungstag der Anmeldung: 19.10.2011
(73) Patentinhaber: Hardman, Christine, 4001 Basel (CH); Rössler, Karin Barbara, 8777 Diesbach (CH)
(72) Erfinder: Hardman, Christine, 4001 Basel (CH)
(74) Vertreter: Hepp Wenger Ryffel AG

(56) Entgegenhaltungen:
- WO-A1-01/40130
- WO-A2-2004/012854
- JP-A- 2011 075 612
- US-B1- 6 516 633

## Beschreibung

### Technisches Gebiet

Gegenstand der Erfindung ist eine auf der Nanotechnologie basierende lichtempfindliche Beschichtung mit der Eigenschaft, sich in einem reversiblen Prozess, ohne thermische Behandlung, allein unter Lichteinwirkung zu verfärben und ohne Licht wieder zu entfärben.

Die Anwendungen der Erfindung liegen beispielsweise im Bereich der Keramik, der Gestaltung von Oberflächen, von Fassaden, Innen- und Aussenräumen, von Schwimmbädern, im Bereich der Gestaltung von Fahrzeugen, Objekten sowie von Möbeln, Geschirr, Accessoires.

### Stand der Technik

Phototrope oder photochromatische Gläser wurden u. a. in den 1960-er Jahren in US 3 208 860 beschrieben und seither weiter entwickelt US 4 001 019 oder die US 5 019 538 beschreiben technische Verbesserungen reversibler licht-sensitiver Gläser mit hohem lichtbrechendem Index und dennoch schneller Reaktionszeiten sowie hoher Resistenz gegenüber Säuren. Auch aus EP 0 412 656 und EP 0 428 012 und DE 44 01 851 sind lichtempfindliche Gläser bekannt. CH 693 774 A5 beschreibt eine Verbesserung bezüglich der mechanischen Belastbarkeit, so dass eine lichtempfindliche Schicht auch für die Herstellung von Wand-, Boden oder Tischplatten eingesetzt werden kann.

### Darstellung der Erfindung

Die Aufgabe der Erfindung liegt darin, eine lichtempfindliche Beschichtung zu schaffen, welche die Nachteile der bekannten lichtempfindlichen Glasur verhindert und welche insbesondere eine erhöhte Reaktionsgeschwindigkeit aufweist und Lichtbilder mit höherem Kontrast sowie besserer Schärfe darstellt.

### Ausführung der Erfindung

Die erfindungsgemässe Beschichtung dient insbesondere zur Erzeugung einer unter UV-Licht verfärbbaren und ohne UV-Licht entfärbbaren

Oberfläche. Die Beschichtung umfasst ein Grundmaterial, insbesondere ein Silikat oder ein Silikat-Gemisch. Ausserdem weist die Beschichtung wenigstens einen Inhaltsstoff in Form eines wasserlöslichen Metallsalzes auf, der ihr - gegebenenfalls zusammen mit weiteren Inhaltsstoffen - lichtempfindliche Eigenschaften verleiht, wenn die Beschichtung bestimmungsgemäss auf eine Unterlage aufgebracht ist. Es können beispielsweise die für phototrope oder photochromatische Gläser gängigen Inhaltsstoffe verwendet werden. Ein bestimmungsgemässes Aufbringen ist im Fall einer als Glasur ausgebildeten Beschichtung z.B. das Einbrennen der Glasur.

Der Inhaltsstoff ist ein wasserlösliches Metallsalz, insbesondere ein Silbersalz wie Silberchromat, Silbernitrat oder Silberacetat. Denkbar sind aber auch metallorganische Silberverbindungen. Bevorzugt sind insbesondere Silberhalogenide oder Inhaltsstoffe, welche durch Reaktion mit weiteren Inhaltsstoffen in der bestimmungsgemäss aufgebrachten Beschichtung Silberhalogenide ergeben. Denkbar wären aber auch Titan-, Chrom-, Kupfer- oder Lithiumoxide in geeigneter Kombination.

Erfindungsgemäss besteht das Grundmaterial, also insbesondere das Silikat oder Silikat-Gemisch, wenigstens teilweise aus Nanopartikeln. Als Silikatgemisch wird ein Silikat oder die Mischung verschiedener Silikate miteinander oder gegebenenfalls mit weiteren Zusatzstoffen verstanden. Unter Nanopartikeln werden im Rahmen dieser Erfindung Partikel verstanden, die eine Grösse von typischerweise weniger als 1 Mikrometer aufweisen. Besonders bevorzugt haben wenigstens 90% der Partikel des Silikat-Gemisches einen Durchmesser kleiner als 0,8 µm. Weiter bevorzugt haben wenigstens 50% der Partikel des Silikat-Gemisches einen Durchmesser kleiner als 0,5 µm und insbesondere wenigstens 10% der Partikel des Silikat-Gemisches einen Durchmesser kleiner als 0,1 µm. Die Nanopartikel können durch eine Feinstvermahlung eines grobkörnigeren Ausgangsmaterials und/oder durch Beifügung von handelsüblichen Nanopartikeln erhalten werden. Dadurch, dass das Grundmaterial, insbesondere das Silikatgemisch zumindest teilweise in Form von Nanopartikeln vorliegt, wird die Geschwindigkeit des reversiblen Prozesses, also des Verfärbens unter Einfluss von UV-Licht, und das Entfärben bei fehlendem Licht, erhöht. Die Beschichtung reagiert auf Licht mit Verfärbung zwischen 25 bis 50 Prozent schneller als die bisher bekannten Beschichtungen. Die Verfärbung wird innerhalb einer Minute deutlich sichtbar. Die verbesserten optischen Eigenschaften erhöhen die gestalterischen Einsatzmöglichkeiten der erfindungsgemässen Beschichtung massgeblich.

Als Träger für die erfindungsgemässe Beschichtung kommen zum Beispiel die Werkstoffe Keramik (gegebenenfalls bereits mit einer ersten Glasur), Metall, Stein, Feuerbeton in Frage.

Grundsätzlich sind verschiedene Anwendungen möglich. Eine erste Anwendung besteht im vollflächigen Auftrag der fotosensiblen Beschichtung auf den Träger. Unter Lichteinwirkung findet ein Nachdunkeln statt, ohne Licht führt ein Umkehrprozess zurück in den ursprünglichen Zustand.

Fliesen, welche auf ihrer herkömmlichen Glasur zusätzlich mit der oben beschriebenen eingebrannten Glasurschicht versehen sind, dunkeln beispielsweise mit UV-Licht nach. Wird ein flacher Gegenstand auf diese Kacheln gelegt und später wieder weggenommen oder verschoben, hinterlässt er bereits nach kurzer Zeit an seiner Kontaktfläche einen hellen Schatten. Wenn ein dreidimensionales Objekt aufgelegt und wieder verschoben wird, hinterlässt es an der Kontaktstelle ebenfalls eine Aufhellung. Zusätzlich wird in einer schwächeren Aufhellung sein Schattenwurf abgebildet und beide zusammen erzeugen ein räumliches Abbild des Objekts. Ohne Licht verlieren sich die Abbilder nach geraumer Zeit und die Oberfläche kehrt in den ursprünglichen Zustand zurück.

Anstelle eines vollflächigen Auftrags der lichtempfindlichen Glasur sind ein teilweiser Auftrag von lichtempfindlicher und -unempfindlicher Glasur und Kombinationen mit zusätzlichen Glasurschichten vorgesehen. Dabei sind Positiv- oder Negativdarstellungen möglich. Weiter ist eine Kombination der oben beschriebenen Anwendungen mit der nach herkömmlichen Verfahren hergestellten Fotokeramik und keramischen Abziehbildern möglich. Zusätzlich können die Fotokeramik oder das keramische Abziehbild aus der erfindungsgemässen Schicht bestehen. Damit kann ein latentes Bild bei Lichteinwirkung dunkel oder hell erscheinen und im reversiblen Prozess wieder in den Ursprungszustand zurückkehren.

Das Produktionsverfahren mit lichtempfindlicher Glasur für Fotokeramik und keramische Abziehbilder unterscheidet sich nicht wesentlich von der gängigen Herstellungsweise lichtunempfindlicher fotokeramischer Bilder und Abziehbilder.

Lichtempfindliche und lichtunempfindliche Beschichtungen können wie oben beschrieben miteinander kombiniert werden. Diese lichtempfindlichen und lichtunempfindlichen Schichten variieren in der Farbgebung oder sind transparent. Die lichtunempfindliche Schicht dient unter anderem dazu, die lichtempfindliche Schicht zeitweise in ihrer Wirkung farblich zu verstärken oder zu neutralisieren. Dadurch wird ein latent eingebundenes Bild temporär sichtbar oder unsichtbar, abhängig von der Lichtsituation.

Durch die oben erwähnten Möglichkeiten und Kombinationen von Schichten entstehen neue Kompositionen mit temporär aufscheinenden und wieder verschwindenden sowie mit fixierten Bildelementen.

Das Silikatgemisch besteht bevorzugt zumindest teilweise aus einer handelsüblichen Glasur, welche soweit feinstvermahlen wird, bis die gewünschten Partikelgrössen erreicht werden. Eine solche Beschichtungszusammensetzung wird bevorzugt in einer üblichen, bekannten keramischen Vorgehensweise auf dem Träger eingebrannt.

Besonders bevorzugt enthält die Beschichtung einen Silberanteil von bis 25 Gew.-%.

Es ist alternativ auch denkbar, statt einer Feinstvermahlung eines Ausgangsmaterials oder zusätzlich zu einer Feinstvermahlung einer Beschichtungszusammensetzung handelsübliche Nanopartikel beizufügen, z.B. hydrophile pyrogene Kieselsäuren wie Aerosil 300 oder Aerosil MOX 80. Solche mit zusätzlichen Nanopartikeln versehene Beschichtungszusammensetzungen können als Glasur - gegebenenfalls mit einer Glasphase wie Borax - oder auch in anderer Form als als Glasur, z.B. als Engobe aufgetragen werden.

Es ist ausserdem denkbar, der Beschichtungszusammensetzung weitere Stoffe wie z.B. Pigmente zuzusetzen.

Das erfindungsgemässe Verfahren dient zum Beschichten einer Oberfläche mit einer lichtempfindlichen Beschichtung. Dabei wird eine wie vorstehend beschriebene Beschichtungszusammensetzung auf eine Oberfläche aufgetragen und insbesondere anschliessend eingebrannt.

Die Erfindung betrifft ausserdem ein Erzeugnis mit einer mindestens teilweise lichtempfindlichen Oberfläche, bei dem mindestens ein Teilbereich der Oberfläche mit einer wie vorstehende beschriebenen Beschichtungszusammensetzung beschichtet wurde.

Bevorzugt liegt mindestens ein Teilbereich der Oberfläche in einer bestimmten geometrischen Form vor, bevorzugt in Form eines Logos oder Schriftzugs.

Mindestens ein weiterer Teilbereich der Oberfläche kann mit einer nicht lichtempfindlichen Beschichtung beschichtet sein.

Das Erzeugnis kann eine Keramik- oder Emailplatte, ein Möbel, ein Geschirrteil, eine Vase, eine Statue, ein Kunstobjekt oder ein Spielzeug sein. Die Keramikplatte kann glasiert oder unglasiert sein.

Erfindungsgemäss kann die Beschichtungszusammensetzung zur Erzeugung einer reversiblen lichtempfindlichen Glasur zur Beschichtung von Wand-, Boden-, Fassaden-, Schwimmbad-, Fahrzeug- und/oder Möbeloberflächen verwendet werden.

Die Erfindung wird nachfolgend in einem Ausführungsbeispiel näher erläutert:
Als Silikatgemisch wird die handelsübliche Glasur T23 (erhältlich bei Lehmhuus AG, Basel) verwendet. Auf 80 Gew-% Glasur werden als Inhaltsstoffe, welche der eingebrannten Beschichtung lichtempfindliche Eigenschaften verleihen 15 Gew.-% Silbernitrat und 5 Gew.-% Natriumchlorid verwendet. Allgemein kann z.B. eine handelsübliche Barium-Zink Fritte verwendet werden.

Die Glasur weist ursprünglich Partikel mit einer Grösse von etwa 40 µm auf. Die Glasur wird in einer Kugelmühle 100 Stunden mit 3-mm-Zirkonoxid-Kugeln nass feinst vermahlen. Die Gewichtsanteile von Kugel, Glasur und Wasser betragen etwa 1:1:1. Dadurch wird eine Oberfläche in der Glasur von 10-15m2/g (im Vergleich zu einer Oberfläche der ungemahlenen Glasur von 1-2m2/g) erreicht. Bei der Zugabe von weiteren Nanopartikeln wie pyrogener Kieselsäuren (z.B. Aerosil 300 oder 380) kann die Oberfläche sogar weiter erhöht werden.

Dann werden die Salze dazu gesetzt. Das Produkt wird auf die vorgewärmte Fläche aufgespritzt und bei 1000 bis 1050 Grad Celisus eingebrannt.

## Patentansprüche

1. Als Glasur einbrennbare Beschichtungszusammensetzung zur Erzeugung einer unter UV-Licht verfärbbaren und ohne UV-Licht entfärbbaren Beschichtung, umfassend
- ein Grundmaterial, insbesondere ein Silikat oder ein Silikat-Gemisch
- wenigstens einen Inhaltsstoff in Form eines wasserlöslichen Metallsalzes, insbesondere eines Silbersalzes, welcher dem Grundmaterial zugesetzt ist und der die Beschichtungszusammensetzung in bestimmungsgemäss aufgebrachter Form unter UV-Licht verfärbt und ohne UV-Licht entfärbt,
**dadurch gekennzeichnet, dass** das Grundmaterial, insbesondere das Silikat oder Silikat-Gemisch wenigstens teilweise aus Nanopartikeln besteht.

2. Beschichtungszusammensetzung nach Anspruch 1, **dadurch gekennzeichnet, dass** die Beschichtungszusammensetzung einen Silberanteil von bis zu 25 Gew.-% enthält.

3. Beschichtungszusammensetzung gemäss Anspruch 1, **dadurch gekennzeichnet, dass** das Grundmaterial ein Silikat oder Silikatgemisch umfasst, das eine vermahlene handelsübliche Glasur ist oder Email umfasst.

4. Beschichtungszusammensetzung gemäss Ansprüche 1 bis 3, **dadurch gekennzeichnet**, wenigstens 90% der Nanopartikel einen Durchmesser kleiner als 0,8 µm aufweisen und dass insbesondere wenigstens 50% der Partikel des Silikats oder Silikat-Gemisches einen Durchmesser kleiner als 0,5 µm und insbesondere wenigstens 10% der Partikel des Silikats oder Silikat-Gemisches einen Durchmesser kleiner als 0,1 µm. aufweisen.

5. Beschichtungszusammensetzung gemäss einem der Ansprüche 1 bis 4, **dadurch gekennzeichnet, dass** der Inhaltsstoff aus der Gruppe aus Silberhalogeniden, Silbernitrat, Silberacetat, Titanoxide, Chromoxide, Kupferoxide, Lithiumoxide und metallorganischen Silberverbindungen ausgewählt ist.

6. Beschichtungszusammensetzung gemäss einem der Ansprüche 1 bis 5, **dadurch gekennzeichnet, dass** dem Grundmaterial zusätzliche Nanopartikel, insbesondere hydrophile pyrogene Kieselsäuren oder Mischoxide beigefügt sind.

7. Verfahren zum Beschichten einer Oberfläche mit einer unter UV-Licht verfärbbaren und ohne UV-Licht entfärbbaren Beschichtung, **dadurch gekennzeichnet, dass** eine Beschichtungszusammensetzung gemäss einem der Ansprüche 1 bis 6 auf eine Oberfläche aufgetragen und anschliessend eingebrannt wird.

8. Erzeugnis mit einer mindestens teilweise unter UV-Licht verfärbbaren und ohne UV-Licht entfärbbaren Oberfläche, **dadurch gekennzeichnet, dass** mindestens ein Teilbereich der Oberfläche mit einer Beschichtungszusammensetzung gemäss einem der Ansprüche 1 bis 6 durch ein Verfahren gemäss Anspruch 7 beschichtet wurde.

9. Erzeugnis gemäss Anspruch 8, **dadurch gekennzeichnet, dass** mindestens ein Teilbereich der Oberfläche in einer bestimmten geometrischen Form vorliegt, bevorzugt in Form eines Logos oder Schriftzugs.

10. Erzeugnis gemäss einem der Ansprüche 8 oder 9, **dadurch gekennzeichnet, dass** mindestens ein weiterer Teilbereich der Oberfläche mit einer nicht unter UV-Licht verfärbbaren und ohne UV-Licht entfärbbaren Beschichtung beschichtet ist.

11. Erzeugnis gemäss einem der Ansprüche 8 bis 10, **dadurch gekennzeichnet, dass** das Erzeugnis eine Keramik- oder Emailplatte, ein Möbel, ein Geschirrteil, eine Vase, eine Statue, ein Kunstobjekt oder ein Spielzeug ist.

12. Verwendung einer Beschichtungszusammensetzung gemäss einem der Ansprüche 1 bis 6 zur Erzeugung einer reversiblen unter UV-Licht verfärbbaren und ohne UV-Licht entfärbbaren einbrennbaren Glasur zur Beschichtung von Wand-, Boden-, Fassaden-, Schwimmbad-, Fahrzeug- und/oder Möbeloberflächen.

## Claims

1. A coating composition which can be cured as a glaze to produce a coating which can change colour under UV light and can revert to the initial colour in the absence of UV light, comprising
- a base material, in particular a silicate or a silicate mixture
- at least one component in the form of a water-soluble metal salt, in particular a silver salt, which is added to the base material and which changes the colour of the coating composition under UV light when applied as intended and which reverts the colour of the coating composition to the initial colour in the absence of UV light,
**characterised in that** the base material, in particular the silicate or silicate mixture, consists at least partly of nanoparticles.

2. Coating composition according to claim 1, **characterised in that** the coating composition contains up to 25 wt. % of silver.

3. Coating composition according to claim 1, **characterised in that** the base material includes a silicate or silicate mixture which is a commercially available ground glaze or comprises enamel.

4. Coating composition according to claims 1 to 3, **characterised in that** at least 90% of the nanoparticles have a diameter of less than 0.8µm and in particular at least 50% of the particles of the silicate or silicate mixture have a diameter of less than 0.5µm and in particular at least 10% of the particles of the silicate or silicate mixture have a diameter of less than 0.1µm.

5. Coating composition according to any one of claims 1 to 4, **characterised in that** the component is selected from the group consisting of silver halides, silver nitrate, silver acetate, titanium oxides, chromium oxides, copper oxides, lithium oxides and organometallic silver compounds.

6. Coating composition according to any one of claims 1 to 5, **characterised in that** additional nanoparticles, in particular hydrophilic fumed silicas or mixed oxides, are added to the base material.

7. A process for coating a surface with a coating which can change colour under UV light and can revert to the initial colour in the absence of UV light, **characterised in that** a coating composition according to one of claims 1 to 6 is applied to a surface and then cured.

8. A product with a surface which at least partially changes colour under UV light and reverts to the initial colour in the absence of UV light, **characterised in that** at least a part of the surface has been coated with a coating composition according to one of claims 1 to 6 by a process according to claim 7.

9. The product according to claim 8, **characterised in that** at least part of the surface is in a specific geometric shape, preferably in the form of a logo or lettering.

10. The product according to one of claims 8 or 9, **characterised in that** at least one further part of the surface is coated with a coating that cannot change colour under UV light and revert to the initial colour in the absence of UV light.

11. The product according to any one of claims 8 to 10, **characterised in that** the product is a ceramic or enamel plate, a piece of furniture, a piece of tableware, a vase, a statue, an art object or a toy.

12. Use of a coating composition according to any one of claims 1 to 6 for producing a curable glaze which can reversibly change colour under UV light and revert to the initial colour in the absence of UV light for coating a wall, floor, facade, swimming pool, vehicle and/or furniture surfaces.

## Revendications

1. Composition de revêtement pouvant être tempérer sous forme de glaçure pour produire un revêtement pouvant changer de couleur sous lumière UV et pouvant revenir à la couleur initiale en l'absence de lumière UV, comprenant
- un matériau de base, en particulier un silicate ou un mélange de silicates
- au moins un composant sous la forme d'un sel métallique soluble dans l'eau, en particulier un sel d'argent, qui est ajouté au matériau de base et qui change la couleur de la composition de revêtement sous l'effet de la lumière UV lorsqu'elle est appliquée comme prévu et qui fait revenir la composition de revêtement à sa couleur initiale en l'absence de lumière UV,
**caractérisé en ce que** le matériau de base, en particulier le silicate ou le mélange de silicates, est constitué au moins en partie de nanoparticules.

2. Composition de revêtement selon la revendication 1, **caractérisée en ce que** la composition de revêtement contient jusqu'à 25 % en poids d'argent.

3. Composition de revêtement selon la revendication 1, **caractérisée en ce que** le matériau de base comprend un silicate ou un mélange de silicates qui est une glaçure en poudre disponible dans le commerce ou qui comprend de l'émail.

4. Composition de revêtement selon les revendications 1 à 3, **caractérisée en ce qu'**au moins 90% des nanoparticules ont un diamètre inférieur à 0,8µm et en particulier au moins 50% des particules du silicate ou du mélange de silicate ont un diamètre inférieur à 0,5µm et en particulier au moins 10% des particules du silicate ou du mélange de silicate ont un diamètre inférieur à 0,1µm.

5. Composition de revêtement selon l'une des revendications 1 à 4, **caractérisée en ce que** le composant est choisi dans le groupe constitué des halogénures d'argent, du nitrate d'argent, de l'acétate d'argent, des oxydes de titane, des oxydes de chrome, des oxydes de cuivre, des oxydes de lithium et des composés organométalliques de l'argent.

6. Composition de revêtement selon l'une des revendications 1 à 5, **caractérisée par** l'ajout de nanoparticules supplémentaires, en particulier des silices pyrogénées hydrophiles ou des oxydes mixtes, au matériau de base.

7. Procédé de revêtement d'une surface avec un revêtement pouvant changer de couleur sous l'effet de la lumière UV et pouvant revenir à sa couleur initiale en l'absence de lumière UV, **caractérisé en ce qu'**une composition de revêtement selon l'une des revendications 1 à 6 est appliquée à une surface et est ensuite tempérer.

8. Produit dont la surface est au moins partiellement changée de couleur sous l'effet de la lumière UV et revient sa couleur initiale en l'absence de lumière UV, **caractérisé en ce qu'**au moins une partie de la surface a été recouverte d'une composition de revêtement selon l'une des revendications 1 à 6 par un procédé selon la revendication 7.

9. Produit selon la revendication 8, **caractérisé en ce qu'**au moins une partie de la surface a une forme géométrique spécifique, de préférence sous la forme d'un logo ou d'un lettrage.

10. Produit selon l'une des revendications 8 ou 9, **caractérisé en ce qu'**au moins une autre partie de la surface est recouverte d'un revêtement qui ne peut changer de couleur sous l'effet de la lumière UV et ne peut revenir sa couleur initiale en l'absence de lumière UV.

11. Produit selon l'une des revendications 8 à 10, **caractérisé en ce que** le produit est une assiette en céramique ou en émail, un meuble, une pièce de vaisselle, un vase, une statue, un objet d'art ou un jouet.

12. Utilisation d'une composition de revêtement selon l'une quelconque des revendications 1 à 6 pour produire une glaçure pouvant être tempérer et qui peut changer de couleur de manière réversible sous l'effet de la lumière UV et qui peut revenir à sa couleur initiale en l'absence de lumière UV, le revêtement étant un revêtement pour murs, sols, façades, piscines, surfaces de véhicules et/ou de meubles.
